# EUROPEAN PATENT APPLICATION

(11) **EP 4 520 633 A1**
(43) Date of publication of application: **12.03.2025**
(21) Application number: 24185283.9
(22) Date of filing: 28.06.2024
(51) Int. Cl.: B62D 5/00, B62D 5/04

(54) **METHOD AND APPARATUS FOR CONTROLLING STEERING, STORAGE MEDIUM, AND VEHICLE**

(30) Priority: 05.09.2023 CN 202311140263
(71) Applicant: Xiaomi EV Technology Co., Ltd., 100176 Beijing (CN)
(72) Inventor: JIN, Cheng, Beijing, 100176 (CN)
(74) Representative: Zimmermann, Tankred Klaus

(57) **Abstract**

The present invention relates to the technical field of vehicles, in particular to a method and an apparatus for controlling steering, a storage medium, and a vehicle. The method for controlling steering includes: determining (S201) that a vehicle is in a steer-by-wire mode; determining (5202) whether a first motor system and a second motor system fail, where the first motor system is in transmission fit with a steering column, and the second motor system is in transmission fit with a steering gear rack; controlling (5203) a clutch to be engaged on a condition that at least one of the first motor system and the second motor system fails; and switching (5204) the first motor system to a column electric power steering (CEPS) system on a condition that the second motor system fails.

## Description

### TECHNICAL FIELD

The present invention or disclosure relates to the technical field of vehicles, in particular to a method and an apparatus for controlling steering, a storage medium, and a vehicle.

### BACKGROUND OF THE INVENTION

In the related art, a steer-by-wire system is usually equipped with an upward-rotating motor and two downward-rotating motors, each of which is controlled by an electronic control unit (ECU).

### SUMMARY OF THE INVENTION

To overcome problems in the related art, the present invention provides a method and an apparatus for controlling steering, a storage medium, and a vehicle.

According to a first aspect of an example of the present invention, a method for controlling steering is provided. The method includes:
determining that a vehicle is in a steer-by-wire mode;
determining whether a first motor system and a second motor system fail, where the first motor system is in transmission fit with a steering column, and the second motor system is in transmission fit with a steering gear rack;
controlling a clutch to be engaged on a condition that at least one of the first motor system and the second motor system fails; and
switching the first motor system to a column electric power steering (CEPS) system on a condition that the second motor system fails.

Optionally, after determining whether a first motor system and a second motor system fail, the method further includes:
switching the second motor system to a rack electric power steering, REPS system on a condition that the second motor system does not fail.

Optionally, after determining whether a first motor system and a second motor system fail, the method further includes:
controlling the clutch to be disengaged on a condition that neither of the first motor system and the second motor system fails; and
outputting a hand power feedback torque through the first motor system, and outputting a steering torque through the second motor system.

Optionally, the method further includes:
determining that the vehicle is in a mechanical steering mode;
controlling the clutch to be engaged;
determining whether the second motor system fails; and
switching the second motor system to an REPS system on a condition that the second motor system does not fail.

Optionally, after the determining whether the second motor system fails, the method further includes:
switching the first motor system to the CEPS system on a condition that the second motor system fails.

Optionally, the first motor system includes a first motor in transmission fit with the steering column and a first controller configured to control the first motor, and the second motor system includes a second motor in transmission fit with the steering gear rack and a second controller configured to control the second motor;
a failure of the first motor system includes:
a communication failure of the first controller and/or a failure of the first motor; and
a failure of the second motor system includes:
   a communication failure of the second controller and/or a failure of the second motor.

Optionally, the method further includes:
switching a steering mode of the vehicle to a corresponding steer-by-wire mode or mechanical steering mode in response to a selection operation by a user on the steering mode.

According to a second aspect of an example of the present invention, an apparatus for controlling steering is provided. The apparatus includes:
a mode determination module configured to determine that a vehicle is in a steer-by-wire mode;
a failure determination module configured to determine whether a first motor system and a second motor system fail on a condition that the vehicle is in the steer-by-wire mode, where the first motor system is in transmission fit with a steering column, and the second motor system is in transmission fit with a steering gear rack;
a clutch control module configured to control a clutch to be engaged on a condition that at least one of the first motor system and the second motor system fails; and
a switch module configured to switch the first motor system to a CEPS system on a condition that the second motor system fails.

Optionally, the switch module is further configured to switch the second motor system to a rack electric power steering (REPS) system on a condition that the second motor system does not fail.

Optionally, the clutch control module is further configured to control the clutch to be disengaged on a condition that neither of the first motor system and the second motor system fails.

The apparatus for controlling steering further includes:
an output module configured to output a hand power feedback torque through the first motor system, and output a steering torque through the second motor system.

Optionally, the mode determination module is further configured to determine that the vehicle is in a mechanical steering mode.

The clutch control module is further configured to control the clutch to be engaged on a condition that the vehicle is in the mechanical steering mode.

The failure determination module is further configured to determine whether the second motor system fails on a condition that the vehicle is in the mechanical steering mode.

According to a third aspect of an example of the present invention, a computer-readable storage medium is provided. The computer-readable storage medium stores a computer program instruction, where the computer program instruction when executed by a processor, causes the processor to implement the method for controlling steering provided in the first aspect of the present invention.

According to a fourth aspect of an example of the present invention, a vehicle is provided. The vehicle includes: a processor, and a memory configured to store a processor-executable instruction, where the processor is configured to execute the instruction stored in the memory, so as to implement the method for controlling steering provided by the first aspect.

The technical solution provided by an example of the present invention can have the following beneficial effects:
In the steer-by-wire mode, when at least one of the first motor system and the second motor system fails, mechanical steering may be performed by engaging the clutch, such that steer-by-wire safety is improved. If the second motor system fails, the first motor system may be switched to the CEPS system, such that steering power can be further provided on the steering column on the basis of mechanical steering. It can be seen that an upward-rotating motor in the first motor system can be used as redundant backup of a downward-rotating motor in the second motor system, and additional redundant backup of the downward-rotating motor is no longer needed. According to the solution, merely two motors, that is, one upward-rotating motor and one downward-rotating motor are needed, and merely two ECUs can be needed accordingly, such that a cost can be saved, and complexity of the system can be reduced.

It should be understood that the above general description and the following detailed description are merely illustrative and explanatory, and cannot limit the present invention.

### BRIEF DESCRIPTION OF DRAWINGS

The drawings here are incorporated into the description as a constituent part of the description, illustrate examples conforming to the present invention, and serve to explain principles of the present invention along with the description.
FIG. 1 is a schematic diagram of a steering system according to an example.
FIG. 2 is a flowchart of a method for controlling steering according to an example.
FIG. 3 is a flowchart of a method for controlling steering according to an example.
FIG. 4 is a flowchart of a method for controlling steering according to an example.
FIG. 5 is a flowchart of a method for controlling steering according to an example.
FIG. 6 is a block diagram of an apparatus for controlling steering according to an example.

### Reference numerals:

101-first motor system; 102-second motor system; 103-clutch; 104-steering column; 105-steering shaft; 1011-first motor; 1012-first controller; 1013-first sensor assembly; 1021-second motor; 1022-second controller; and 1023-second sensor assembly.

### DETAILED DESCRIPTION OF THE INVENTION

Examples will be described in detail here, and their instances are shown in the accompanying drawings. When the following description involves the accompanying drawings, the same numerals in different accompanying drawings indicate the same or similar elements unless otherwise indicated. Embodiments described in the following examples do not denote all embodiments consistent with the present invention. On the contrary, these embodiments are merely instances of apparatuses and methods consistent with some aspects of the present invention as detailed in the appended claims.

A conventional steering system is excessively high in cost due to the three motors and three ECUs, and further becomes complex because of redundant backup of the downward-rotating motors.

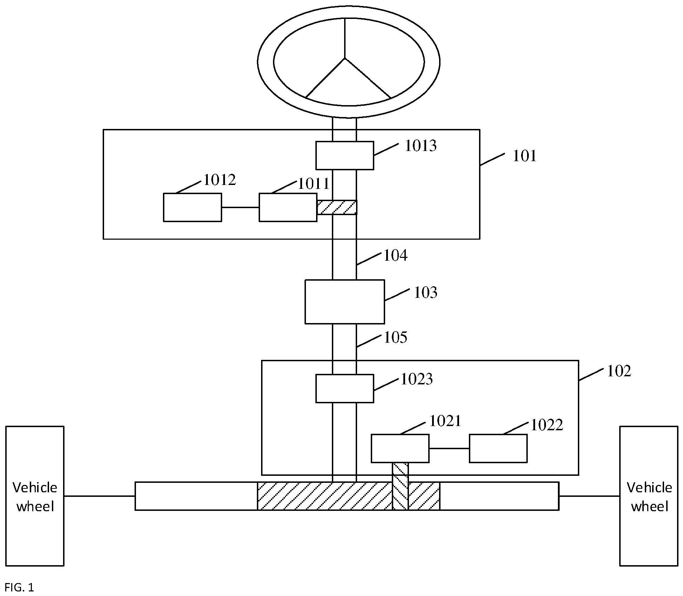

An example of the present invention provides a method for controlling steering. Optionally, the method for controlling steering is applied to a steering system of a vehicle. At first, FIG. 1 is a schematic diagram of a steering system according to an example. As shown in FIG. 1, the steering system includes a first motor system 101, a second motor system 102 and a clutch 103 arranged between a steering column 104 and a steering shaft 105. The first motor 101 system is in transmission fit with the steering column 104, and the second motor system 102 is in transmission fit with a steering gear rack.

Optionally, the first motor system 101 includes a first motor 1011 in transmission fit with the steering column 104 and a first controller 1012 configured to control the first motor 1011. Optionally, the first motor system 101 further includes a first sensor assembly 1013. Optionally, the second motor system 102 includes a second motor 1021 in transmission fit with the steering gear rack and a second controller 1022 configured to control the second motor 1021. Optionally, the second motor system 102 further includes a second sensor assembly 1023.

In some examples, the first controller 1012 and the second controller 1022 are connected to a communication bus, and may communicate with each other. Optionally, the first controller 1012 and the second controller 1022 may be two independent controllers that are separated from each other. Optionally, the first controller 1012 and the second controller 1022 may also be integrated in the same processor.

The first motor 1011 may also be referred to as an upward-rotating motor or a handwheel actuator (HWA). Optionally, the first motor system 101 may also be referred to as an HWA system.

The second motor 1021 may also be referred to as a downward-rotating motor or a roadwheel actuator (RWA). Optionally, the second motor system 102 may also be referred to as an RWA system.

Optionally, the steering system further includes a vehicle controller (not shown).

It should be noted that the method for controlling steering provided in an example of the present invention is performed by the processor of the vehicle. Optionally, the processor may include at least one of the first controller 1012, the second controller 1022 and the vehicle controller. For example, all or some of steps in the method for controlling steering provided by an example of the present invention may be performed by the first controller 1012, all or some of steps may be performed by the second controller 1022, and all or some of steps may be performed by the vehicle controller.

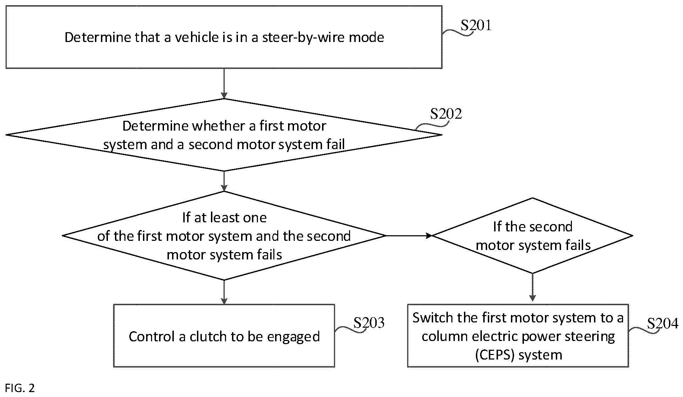

FIG. 2 is a flowchart of a method for controlling steering according to an example. With reference to FIG. 2, the method for controlling steering provided by an example of the present invention includes:
S201, it is determined that a vehicle is in a steer-by-wire mode.

The steering mode of the vehicle includes the steer-by-wire mode. Optionally, the steering mode of the vehicle further includes a mechanical steering mode.

In some examples, a user may select the steering mode of the vehicle. Then, the steering mode of the vehicle is switched to a corresponding steer-by-wire mode or mechanical steering mode in response to a selection operation by the user on the steering mode.

S202, whether the first motor system and the second motor system fail is determined.

The step includes: whether the first motor system fails is determined and whether the second motor system fails is determined.

S203, a clutch is controlled to be engaged on a condition that at least one of the first motor system and the second motor system fails.

The case that at least one of the first motor system and the second motor system fails includes:
a case that the first motor system fails and the second motor system does not fail, a case that the first motor system does not fail and the second motor system fails, and a case that the first motor system and the second motor system fail.

Optionally, a failure of the first motor system may include a communication failure of the first controller and/or a failure of the first motor. Optionally, a failure of the second motor system may include a communication failure of the second controller and/or a failure of the second motor.

In some examples, disengagement and engagement of the clutch may be controlled by at least one of the first controller, the second controller and the vehicle controller. For example, in some examples, on a condition that a communication message is not received from the second controller within first time, the first controller determines that the second motor system fails, and then controls the clutch to be engaged. In some other examples, on a condition that a communication message is not received from the first controller within second time, the second controller determines that the first motor system fails, and then controls the clutch to be engaged. In yet some other examples, on a condition that communication messages are not received from the first controller and the second controller within third time, the vehicle controller determines that the first motor system and the second motor system fail, and then controls the clutch to be engaged. In still some other examples, the above-mentioned operations may all be performed by the vehicle controller.

S204, the first motor system is switched to a column electric power steering (CEPS) system on a condition that the second motor system fails.

According to an example of the present invention, in the steer-by-wire mode, when at least one of the first motor system and the second motor system fails, mechanical steering may be performed by engaging the clutch, such that steer-by-wire safety is improved. If the second motor system fails, the first motor system may be switched to the CEPS system, such that steering power can be further provided by the steering column on the basis of mechanical steering. It can be seen that the upward-rotating motor in the first motor system can be used as redundant backup of the downward-rotating motor in the second motor system, and additional redundant backup of the downward-rotating motor is no longer needed. According to the solution, merely two motors, that is, one upward-rotating motor and one downward-rotating motor are needed, and merely two ECUs (for example, the first controller and the second controller) can be needed accordingly, such that a cost can be saved, and complexity of the system can be reduced.

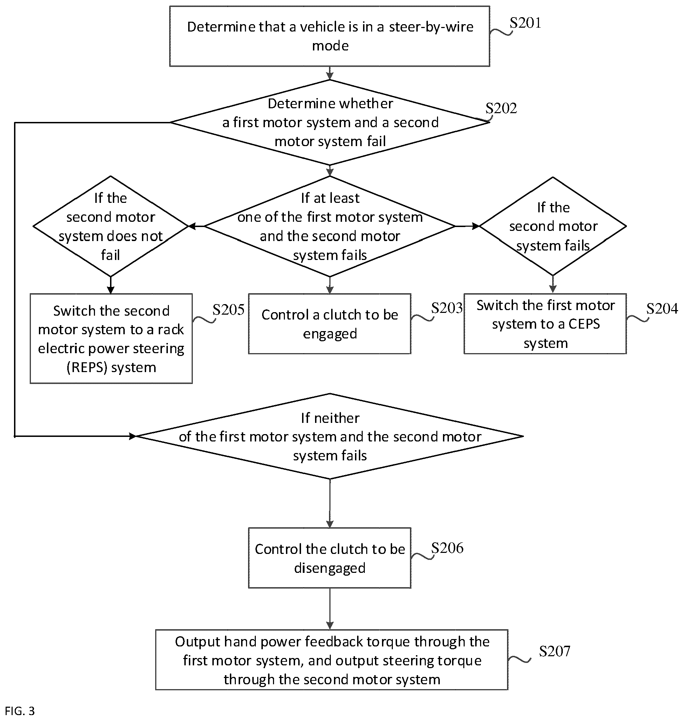

In some examples, with reference to FIG. 3, the method for controlling steering further includes:

S205, the second motor system is switched to a rack electric power steering (REPS) system on a condition that the second motor system does not fail.

According to an example of the present invention, when at least one of the first motor system and the second motor system fails, mechanical steering may be performed by engaging the clutch, such that steer-by-wire safety is improved. If the second motor system does not fail, the second motor system may be switched to the REPS system, such that steering power can be provided on the steering gear rack on the basis of mechanical steering. Optionally, in this case, the first motor system stops working due to the failure.

S206, the clutch is controlled to be disengaged on a condition that neither of the first motor system and the second motor system fails.

S207, hand power feedback torque is output through the first motor system, and steering torque is output through the second motor system.

According to an example of the present invention, when neither of the first motor system and the second motor system fails, the clutch is controlled to be disengaged, and the first motor system and the second motor system work in a steer-by-wire working mode. In the steer-by-wire working mode, a driver does not have corresponding hand feeling when operating the steering wheel due to lack of a mechanical connection between a steering wheel and a steering actuator. Thus, in the first motor system, the first controller may compute the hand power feedback torque and control the first motor to output the hand power feedback torque to act on the steering column, such that the driver has the corresponding hand feeling when operating the steering wheel. In addition, in the second motor system, the second controller may compute the steering torque according to a turning angle of the steering wheel, a turning direction of the steering wheel, a vehicle speed, etc., and control the second motor to output the steering torque to act on the steering gear rack, thus implementing steering.

It is easy to understand that in an example, when it is assumed that neither of the first motor system and the second motor system fails at a first moment, but the second motor system suddenly fails at a second moment, the clutch may be immediately controlled to be engaged, and the first motor system may be immediately switched to the CEPS system as the steering backup of the second motor system, so as to provide steering power instead of the second motor system.

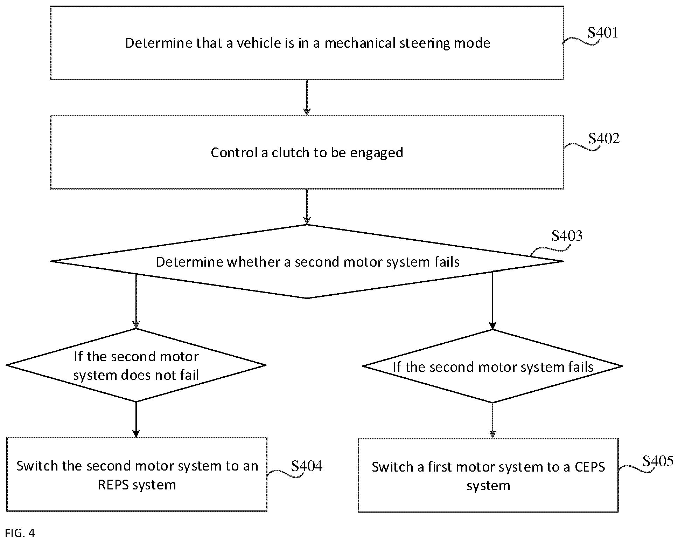

FIG. 4 is a flowchart of a method for controlling steering according to an example. With reference to FIG. 4, the method for controlling steering may include:

S401, it is determined that a vehicle is in a mechanical steering mode.

The steering mode of the vehicle includes the mechanical steering mode. Optionally, the steering mode of the vehicle further includes a steer-by-wire mode.

S402, a clutch is controlled to be engaged.

In some examples, the clutch is controlled to be engaged after the vehicle is switched to the mechanical steering mode.

S403, whether a second motor system fails is determined.

S404, the second motor system is switched to an REPS system on a condition that the second motor system does not fail.

In some examples, when the second motor system does not fail, the second motor system is switched to the REPS system regardless of whether the first motor system fails. Thus, steering power can be provided on the steering gear rack on the basis of mechanical steering.

S405, the first motor system is switched to the CEPS system on a condition that the second motor system fails.

In some examples, when the second motor system fails, the first motor system is used as the steering backup of the second motor system, and the first motor system is switched to the CEPS system. Thus, steering power can be provided on the steering column on the basis of mechanical steering.

According to an example of the present invention, in the mechanical steering mode, the clutch is controlled to be engaged for mechanical steering on one hand, and the first motor system or the second motor system provides electric power for steering according to whether the second motor system fails on the other hand.

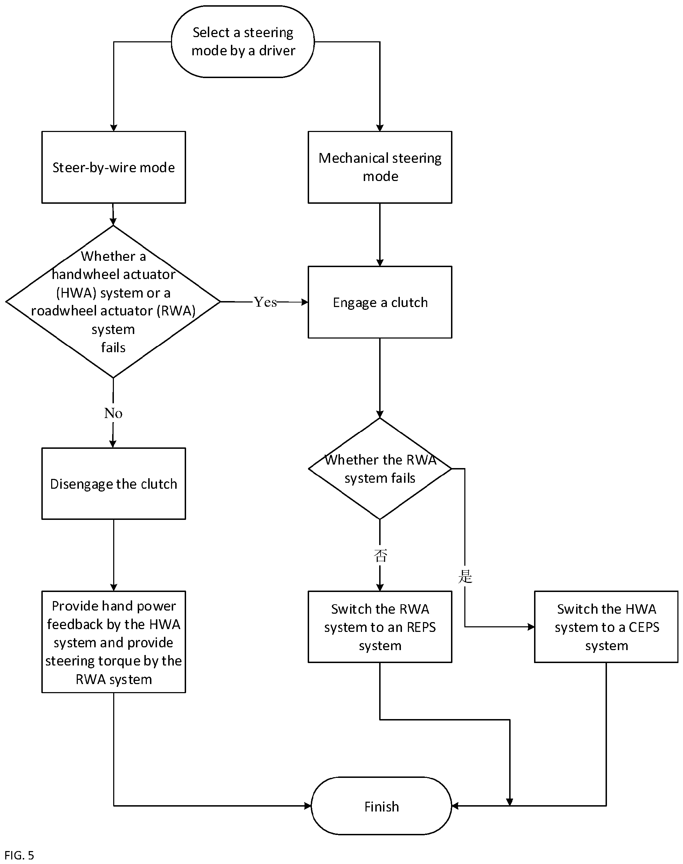

FIG. 5 is a flowchart of a specific embodiment of a method for controlling steering according to an example. As shown in FIG. 5, the driver selects the steering mode of the vehicle at first, such as the steer-by-wire mode or the mechanical steering mode, and the steering mode of the vehicle is switched to a corresponding steer-by-wire mode or mechanical steering mode in response to this selection operation.

After switching to steer-by-wire mode is performed, whether the HWA system or the RWA system fails is determined.

If neither of the HWA system and the RWA system fails, the clutch is controlled to be disengaged, and then hand power feedback is provided through the HWA system and steering torque is provided through the RWA system. If at least one of the HWA system and RWA system fails, the clutch is controlled to be disengaged, and whether the RWA system fails is determined. If the RWA system fails, the HWA system is switched to the CEPS system, and if the RWA system does not fail, the RWA system is switched to the REPS system.

After switching to the mechanical steering mode is performed, the clutch is controlled to be engaged, and then whether the RWA system fails is determined. If the RWA system fails, the HWA system is switched to the CEPS system, and if the RWA system does not fail, the RWA system is switched to the REPS system.

The working mode of the steering system will be illustratively described below according to the schematic diagram of the steering system shown in FIG. 1. It should be understood that the specific embodiment of the working mode described below is merely illustrative, and does not indicate that the following specific embodiment must be followed.
(1) When neither of the first motor system 101 and the second motor system 102 fails, the clutch 103 is controlled to be disengaged. When the driver turns the steering wheel, the first controller 1012 obtains sensing information such as the turning angle and the turning direction of the steering wheel through the first sensor assembly 1013, and sends the sensing information to the second controller 1022. The second controller 1022 computes the steering torque according to the sensing information and controls the second motor 1021 to output the steering torque, thus driving wheels to rotate. In addition, the first controller 1012 may compute the hand power feedback torque according to the information such as the turning angle of the steering wheel, the turning direction of the steering wheel, the vehicle speed, a rack speed and rack force, and control the first motor 1011 to output the hand power feedback torque. Thus, the driver is provided with operating hand feeling and simulated road feeling.
(2) When the first motor system 101 fails and the second motor system 102 does not fail, the clutch 103 is controlled to be engaged, and the second motor system 102 is switched to the REPS system. When the driver turns the steering wheel, mechanical steering is performed through the clutch 103. The second controller 1022 obtains the turning torque of the steering wheel of the driver through the second sensor assembly 1023, computes a first power torque, and controls the second motor 1021 to output the first power torque, thus applying the steering power to the steering gear rack.
(3) When the first motor system 101 does not fail and the second motor system 102 fails, the clutch 103 is controlled to be engaged, and the first motor system 101 is switched to the CEPS system. When the driver turns the steering wheel, mechanical steering is performed through the clutch 103. The first controller 1012 obtains the turning torque of the steering wheel of the driver through the first sensor assembly 1013, computes a second power torque, and controls the first motor 1011 to output the second power torque, thus applying the steering power to the steering column 104.
(4) When the first motor system 101 and the second motor system 102 fail, the clutch 103 is controlled to be engaged. When the driver turns the steering wheel, the first motor system 101 and the second motor system 102 cannot provide electric steering power, and merely mechanical steering is performed.

To sum up, according to an example of the present invention, the clutch is added to a non-redundant steer-by-wire system to implement redundancy of steering. The first motor system is configured to provide hand power feedback in the steer-by-wire, and provide the steering power after the clutch is engaged as a backup system of the second motor system. An example of the present invention can implement steering by wire and steering redundancy backup at a low cost.

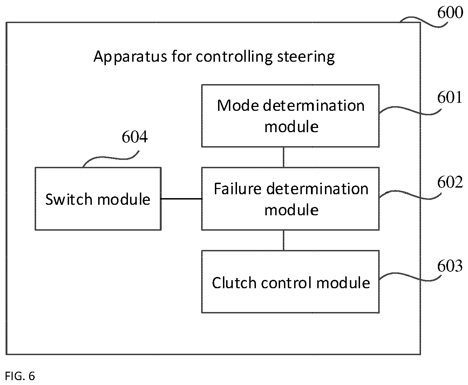

FIG. 6 is a block diagram of an apparatus for controlling steering according to an example. As shown in FIG. 6, the apparatus 600 for controlling steering includes:
a mode determination module 601 configured to determine that a vehicle is in a steer-by-wire mode;
a failure determination module 602 configured to determine whether a first motor system and a second motor system fail on a condition that the vehicle is in the steer-by-wire mode, where the first motor system is in transmission fit with a steering column, and the second motor system is in transmission fit with a steering gear rack;
a clutch control module 603 configured to control a clutch to be engaged on a condition that at least one of the first motor system and the second motor system fails; and
a switch module 604 configured to switch the first motor system to a CEPS system on a condition that the second motor system fails.

Optionally, the switch module 604 is further configured to switch the second motor system to a rack electric power steering (REPS) system on a condition that the second motor system does not fail.

Optionally, the clutch control module 603 is further configured to control the clutch to be disengaged on a condition that neither of the first motor system and the second motor system fails.

The apparatus 600 for controlling steering further includes:
an output module configured to output hand power feedback torque through the first motor system, and output steering torque through the second motor system.

Optionally, the mode determination module 601 is further configured to determine that the vehicle is in a mechanical steering mode.

The clutch control module 603 is further configured to control the clutch to be engaged on a condition that the vehicle is in the mechanical steering mode.

The failure determination module 602 is further configured to determine whether the second motor system fails on a condition that the vehicle is in the mechanical steering mode.

With respect to the apparatus 600 for controlling steering in an example described above, specific methods in which the modules perform operations have been described in detail in relevant method examples, and will not be described in detail here.

In an example, the present invention further provides a computer-readable storage medium. The computer-readable storage medium stores a computer program instruction. The program instruction when executed by a processor, causes the processor to implement the method for controlling steering according to the present invention.

In an example, the example of the present invention further provides a vehicle. The vehicle includes: a processor, and a memory configured to store a processor-executable instruction, where the processor is configured to execute the instruction stored in the memory, so as to implement the method for controlling steering according to the present invention.

Illustratively, the vehicle of an example of the present invention may include a steering system (such as the steering system shown in FIG. 1). The steering system further includes a processor and a memory. Optionally, the processor may include at least one of a first controller, a second controller and a vehicle controller.

## Claims

1. A method for controlling steering, comprising:
determining (S201) that a vehicle is in a steer-by-wire mode;
determining (S202) whether a first motor system (101) and a second motor system (102) fail, wherein the first motor system (101) is in transmission fit with a steering column (104), and the second motor system (102) is in transmission fit with a steering gear rack;
controlling (S203) a clutch (103) to be engaged on a condition that at least one of the first motor system (101) and the second motor system (102) fails; and
switching (S204) the first motor system (101) to a column electric power steering, CEPS, system on a condition that the second motor system (102) fails.

2. The method according to claim 1, wherein after the determining (S202) whether a first motor system (101) and a second motor system (102) fail, the method further comprises:
switching (S205) the second motor system (102) to a rack electric power steering, REPS, system on a condition that the second motor system (102) does not fail.

3. The method according to claim 1 or 2, wherein after the determining (S202) whether a first motor system (101) and a second motor system (102) fail, the method further comprises:
controlling (S206) the clutch (103) to be disengaged on a condition that neither of the first motor system (101) and the second motor system (102) fails; and
outputting (S207) a hand power feedback torque through the first motor system (101), and outputting a steering torque through the second motor system (102).

4. The method according to claim 1, further comprising:
determining (S401) that the vehicle is in a mechanical steering mode;
controlling (S402) the clutch (103) to be engaged;
determining (S403) whether the second motor system (102) fails; and
switching (S404) the second motor system (102) to a rack electric power steering, REPS, system on a condition that the second motor system (102) does not fail.

5. The method according to claim 4, wherein after the determining (S403) whether the second motor system (102) fails, the method further comprises:
switching (S405) the first motor system to the CEPS system on a condition that the second motor system (102) fails.

6. The method according to any one of claims 1-5, wherein the first motor system (101) comprises a first motor (1011) in transmission fit with the steering column (104) and a first controller (1012) configured to control the first motor (1011), and the second motor system (102) comprises a second motor (1021) in transmission fit with the steering gear rack and a second controller (1022) configured to control the second motor (1021);
a failure of the first motor system (101) comprises:
a communication failure of the first controller (1012) and/or a failure of the first motor (1011); and
a failure of the second motor system (102) comprises:
a communication failure of the second controller (1022) and/or a failure of the second motor (1021).

7. The method according to any one of claims 1-5, further comprising: switching a steering mode of the vehicle to a corresponding steer-by-wire mode or mechanical steering mode in response to a selection operation by a user on the steering mode.

8. An apparatus (600) for controlling steering, comprising:
a mode determination module (601) configured to determine that a vehicle is in a steer-by-wire mode;
a failure determination module (602) configured to determine whether a first motor system (101) and a second motor system (102) fail on a condition that the vehicle is in the steer-by-wire mode, wherein the first motor system (101) is in transmission fit with a steering column (104), and the second motor system (102) is in transmission fit with a steering gear rack;
a clutch control module (603) configured to control a clutch (103) to be engaged on a condition that at least one of the first motor system (101) and the second motor system (102) fails; and
a switch module (604) configured to switch the first motor system (101) to a column electric power steering, CEPS, system on a condition that the second motor system (102) fails.

9. The apparatus (600) for controlling steering according to claim 8, wherein the switch module (604) further configured to:
switch the second motor system (102) to a rack electric power steering, REPS, system on a condition that the second motor system (102) does not fail.

10. The apparatus (600) for controlling steering according to claim 8 or 9, wherein the clutch control module (603) is further configured to:
control the clutch (103) to be disengaged on a condition that neither of the first motor system (101) and the second motor system (102) fails; and
wherein the apparatus (600) for controlling steering further comprises:
an output module configured to output a hand power feedback torque through the first motor system (101), and output a steering torque through the second motor system (102).

11. The apparatus (600) for controlling steering according to claim 8, wherein
the mode determination module (601) is further configured to determine that the vehicle is in a mechanical steering mode;
the clutch control module (603) is further configured to control the clutch (103) to be engaged on a condition that the vehicle is in the mechanical steering mode;
the failure determination module (602) is further configured to determine whether the second motor system (102) fails on a condition that the vehicle is in the mechanical steering mode.

12. The apparatus (600) for controlling steering according to any one of claims 8-11, wherein the first motor system (101) comprises a first motor (1011) in transmission fit with the steering column (104) and a first controller (1012) configured to control the first motor (1011), and the second motor system (102) comprises a second motor (1021) in transmission fit with the steering gear rack and a second controller (1022) configured to control the second motor (1021);
a failure of the first motor system (101) comprises:
a communication failure of the first controller (1012) and/or a failure of the first motor (1011); and
a failure of the second motor system (102) comprises:
a communication failure of the second controller (1022) and/or a failure of the second motor (1021).

13. A non-transitory computer-readable storage medium, storing a computer program instruction, wherein the program instruction when executed by a processor, causes the processor to implement the method according to any one of claims 1-7.

14. A vehicle, comprising:
a processor; and
a memory configured to store a processor-executable instruction; wherein
the processor is configured to execute the instruction stored in the memory, so as to implement the method according to any one of claims 1-7.
